# EUROPEAN PATENT SPECIFICATION

(11) **EP 2 617 690 B1**
(45) Date of publication and mention of the grant of the patent: **22.11.2017**
(21) Application number: 12305068.4
(22) Date of filing: 19.01.2012
(51) Int. Cl.: C03C 17/30, C03C 21/00, B44C 1/00

(54) **METHOD OF DECORATING CHEMICALLY STRENGTHENED GLASS**
VERFAHREN ZUR DEKORATION VON CHEMISCH VERSTÄRKTEM GLAS
PROCÉDÉ DE DÉCORATION DE VERRE CHIMIQUEMENT RENFORCÉ

(43) Date of publication of application: 24.07.2013
(73) Proprietor: Corning Incorporated, Corning, NY 14831 (US)
(72) Inventor: Henry, David, 91150 Morigny Champigny (FR)
(74) Representative: Le Roux, Martine

(56) References cited:
- US-A- 3 919 150
- US-A- 5 549 929
- US-A1- 2006 191 625
- US-A1- 2008 248 224
- NI H ET AL: "Preparation and characterization of alkoxysilane functionalized isocyanurates", POLYMER, ELSEVIER SCIENCE PUBLISHERS B.V, GB, vol. 41, no. 1, 1 January 2000 (2000-01-01), pages 57-71, XP004244031, ISSN: 0032-3861, DOI: 10.1016/S0032-3861(99)00160-3

## Description

### BACKGROUND

The present disclosure generally relates to a method of decorating chemically strengthened glass.

There is a general desire to decorate glass substrates for both aesthetic and functional purposes. Accordingly, there is a continuing drive for an efficient method of decorating chemically strengthened glass articles with a single phase coating composition. US5549929 provides a screen printable coating composition comprising hydroxy functional materials (I), crosslinkers (II) for curing the hydroxy functional materials, and crystalline reactive diluents (III).

US20080248224A1 discloses a decorative coating for a chemically strengthened glass bottle, which comprises organic binder and several organic and/or inorganic particles that are rigid at or below a first temperature and that soften at a second temperature at which the binder cures.

### BRIEF SUMMARY

According to the present specification, a single phase coating composition for decorating chemically strengthened glass is desirable. In accordance with one embodiment of the present disclosure, a method of decorating chemically strengthened glass is provided. A chemically strengthened glass sheet is deposited with a single phase coating composition. The deposition of the coating composition on the glass sheet is done at a temperature below 400°C. The coating composition is also cured at a temperature below 400°C. The coating composition comprises at least one pigment, at least one mineral filler, and a binder comprising alkoxysilane functionalized isocyanurate or alkoxysilane functionalized biuret. The alkoxysilane is linked to the isocyanurate or biuret by an urea linking group.

In accordance with another embodiment of the present disclosure, a method of decorating chemically strengthened glass is provided. A glass sheet comprising soda lime glass, an alkali containing aluminosilicate glass, an alkali containing aluminoborosilicate glass, an alkali containing borosilicate glass, or an alkali containing glass-ceramic is chemically strengthened by an ion-exchange process. A single phase coating composition is deposited on the glass sheet at a temperature below 300°C. The coating composition is also cured at a temperature below 300°C. The coating composition comprises at least one pigment, at least one mineral filler, and a binder comprising alkoxysilane functionalized isocyanurate or alkoxysilane functionalized biuret. The alkoxysilane is linked to the isocyanurate or biuret by an urea linking group. The pigment is carbon black, iron pigment, cobalt pigment, cadmium pigment, chromium pigment, titanium pigment, zinc pigment, lead pigment, magnesium pigment, vanadium pigment, copper chromite black spinel, or combination thereof. The mineral filler is a silicate, alumina, zirconia, carbide, talc, clay, or combination thereof. When cured, the coating composition provides light transmittance lower than 0.2% for all wavelengths in the UV-visible wavelength range for a 25 micrometer thick cured coating and has a cross hatch adhesion score of 4B or 5B.

Additional features and advantages of the embodiments described herein will be set forth in the detailed description which follows, and in part will be readily apparent to those skilled in the art from that description or recognized by practicing the embodiments described herein, including the detailed description which follows and the claims.

It is to be understood that both the foregoing general description and the following detailed description describe various embodiments and are intended to provide an overview or framework for understanding the nature and character of the claimed subject matter.

### DETAILED DESCRIPTION

Glass articles can be decorated for aesthetics or functional purposes. A conventional method of decorating glass sheets is applying ceramic enamel to glass substrates using a screen printing process. The process requires high temperatures which are necessary to fuse the ceramic enamel to the glass substrate. The enamel typically requires a firing temperature of about 500°C to 700°C to fuse to the glass substrate. Therefore, the glass must withstand these temperatures without loss of its mechanical properties and/or its shape. The high temperature requirement means decoration of thin chemically-toughened glass by means of such ceramic enamels is less desirable than low temperature methods. A major reason for the desirability of avoiding high temperatures is that the thin chemically-toughened glass rapidly loses its mechanical strength when exposed to the high temperatures required to fire ceramic enamel. Without wishing to be bound by theory, the loss of mechanical strength is believed the result of thermal diffusion of ions occurring and thus degradation of the depth of layer (DOL) and compressive stress (CS) that provides the superior resistance to crack initiation and failure. Also high temperature processing induces distortion, such as warping, of the thin glass.

Multi-phase low temperature glass decoration techniques combine two or more phases, e.g., a curing catalyst and a resin, before application to the glass and can be time consuming and limit pot life. Once the batch is mixed, it must be used within a finite time period before the coating composition cures. This is in contrast to a single phase coating composition, which is defined herein as a composition that does not require the addition of a curing catalyst prior to use.

Reference will now be made in detail to embodiments of methods of making decorated chemically strengthened glass. Although the concepts of the present disclosure are presented with specific reference to specific glass compositions, it is contemplated that the concepts will enjoy applicability to a wide variety of glass substrates where decorating is desired.

According to contemplated methods of decorating chemically strengthened glass in accordance with the present disclosure, a glass sheet is provided. The glass sheet is then chemically strengthened. Further, a single phase coating composition is deposited on the glass sheet at a temperature below approximately 400°C. The coating composition comprises at least one pigment, at least one mineral filler, and a binder. The binder may comprise alkoxysilane functionalized isocyanurate or may comprise alkoxysilane functionalized biuret. The alkoxysilane is linked to the isocyanurate or biuret by an urea linking group. The deposited coating composition is then cured at a temperature below approximately 400°C. It is contemplated that the glass sheet may be chemically strengthened far in advance of the deposition step and by an entity separate and distinct from the entity undertaking the deposition step.

It is contemplated that the glass sheet may be a soda lime glass, an alkali containing aluminosilicate glass, an alkali containing aluminoborosilicate glass, an alkali containing borosilicate glass, an alkali containing glass-ceramic, or other glass known by those skilled in the art.

It is contemplated that the glass sheet may be chemically strengthened by an ion-exchange process or some other type of conventional or yet to be developed chemical strengthening process. The ion-exchange process may comprise exchanging Na, Li, or Na and Li ions in the surface of the glass for large alkali ions. The ion-exchange preferably occurs to a depth of at least approximately 40 µm from the surface of the glass sheet.

The binder may comprise alkoxysilane functionalized isocyanurate or alkoxysilane functionalized biuret. According to an embodiment of the method, the alkoxysilane functionalized isocyanurate has the chemical structure 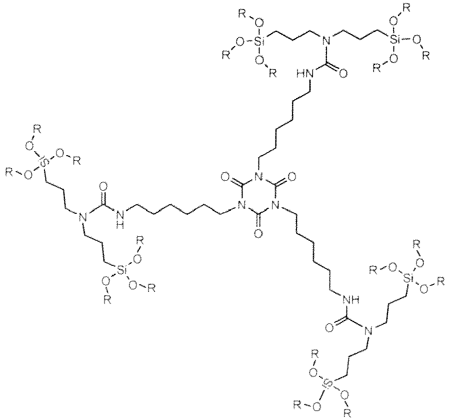 wherein the R is a methyl group or an ethyl group. The alkoxysilane functionalized isocyanurate may be methoxysilane functionalized isocyanurate prepared from Bis[3-(trimethoxysilyl)propyl]amine (CAS Registry Number 82985-35-1). The alkoxysilane functionalized isocyanurate may also be ethoxysilane functionalized isocyanurate prepared from Bis[3-(triethoxysilyl)propyl]amine (CAS Registry Number 13497-18-2).

The isocyanurate resin may be a complex mixture comprising mono-, di- and tri-isocyanurate. Accordingly, the alkoxysilane functionalized isocyanurate may have up to 10 trialkoxysilane moieties per molecule.

According to an embodiment of the method, the alkoxysilane functionalized biuret has the chemical structure 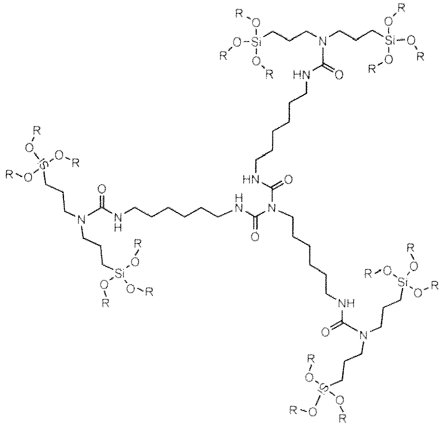 wherein R is a methyl group or an ethyl group. The alkoxysilane functionalized biuret may be methoxysilane functionalized biuret prepared from Bis[3-(trimethoxysilyl)propyl]amine (CAS Registry Number 82985-35-1). The alkoxysilane functionalized biuret may also be ethoxysilane functionalized biuret prepared from Bis[3-(triethoxysilyl)propyl]amine (CAS Registry Number 13497-18-2).

It is contemplated that the mineral filler may be an alumina, a carbide, or a zirconia. The mineral filler may also be a silicate, a talc, a clay, or a combination of mineral fillers. The mineral filler preferably has a hardness of at least approximately 2 on the Mohs scale and more preferably at least approximately 3 on the Mohs scale.

It is contemplated that the pigment may be carbon black, iron pigment, cobalt pigment, cadmium pigment, chromium pigment, titanium pigment, zinc pigment, lead pigment, magnesium pigment, vanadium pigment, copper chromite black spinel, or combinations thereof. Other pigments known to those in the art may also be used. Preferred pigments for automotive glazing include copper chromate black spinel pigment and carbon black pigments.

The coating composition may include other elements beyond the at least one pigment, at least one mineral filler, and the binder. For example, although the adhesion of the coating on the glass is very good without any additives, in a selected embodiment the coating composition further comprises at least one adhesion promoter. Preferred adhesion promoters include 3-glycidoxypropyltrimethoxysilane (DOW Z-6040 from Dow Corning), tris[3-(trimethoxysilyl)propyl]-isocyanurate (Geniosil GF 69 from Wacker), aminopropyl triethoxy silane, bis(trimethoxysilylpropyl)amine, or combinations thereof.

It is contemplated that the coating composition may further comprise a rheological modifier allowing rheology adjustment.

It is contemplated that the coating composition may further comprise a dispersing agent to assist in pigment wetting and substrate wetting.

It is contemplated that the coating composition may further comprise a flow aid to allow control of the flow properties.

It is contemplated that the coating composition may further comprise a solvent. The solvent is preferably an alcohol, glycol, glycol ether, or glycol ether ester but may be any solvent known to one skilled in the art. Selected examples of solvents include DOWANOL PMA (Dow Chemical), DOWANOL PnP (Dow Chemical), and Butyl CELLOSOLVE acetate (Dow Chemical) which have good resin compatibility and solubility characteristics and desirable evaporation rates. Solvents with higher boiling points may also be added such as Butyl CARBITOL acetate (Dow Chemical) or DOWANOL DPMA (Dow Chemical) to control the evaporation rate.

The coating composition is envisioned as deposited on the glass sheet according to any method known to those skilled in the art. A selected example of a deposition method is screen printing. It is contemplated that deposition "on" the glass sheet includes deposition directly on the glass sheet or deposition on an intervening primer or other layer of material between the glass sheet and the coating. It is also contemplated that a coating composition that is deposited "on" the surface of a glass sheet can be covered with a further coating or glass sheet.

The deposition and curing of the coating composition is preferably completed below 400°C, more preferably below 300°C, and most preferably below 200°C.

The alkoxysilane functionalized isocyanurate or alkoxysilane functionalized biuret binder may be produced by stirring a mixture of the isocyanurate polyisocyanate or biuret polyisocyanate and a secondary aminoalkoxysilane. The reaction is envisioned carried out in a way such that the ratio of isocyanate group to amino group (NCO/NH) is in the range of approximately 1.1/1.0 to approximately 0.9/1.0. The ratio of isocyanate group to amino group (NCO/NH) is preferably approximately 1.0/1.0. The NCO/NH ratios within this range are preferred to provide a good stability of the composition. The reaction between the polyisocyanate and the secondary aminoalkoxysilane is carried out without any catalyst added in order to avoid reduced shelf life of the resulting composition.

It is contemplated that the isocyanurate polyisocyanate or biuret polyisocyanate, may be selected from those having superior light fastness and weatherability, such as aliphatic isocyanurate and biuret based on hexamethylene diisocyanate (HDI), methylenedicyclohexyl diisocyanate (H12MDI) and isophorone diisocyanate (IPDI).

Selected examples of the isocyanurate polyisocyanate or biuret polyisocyanate are those available under the trade name Tolonate HDT, Tolonate IDT, Tolonate HDB available from Perstorp and Desmodur N 3600, Desmodur N 3300, Desmodur Z 4470 available from Bayer MaterialScience AG, Leverkusen DE.

Specific examples of suitable compounds include Isocyanurate group-containing polyisocyanates based on HDI (Desmodur N 3300); low viscosity, isocyanurate group-containing polyisocyanates based on HDI (Desmodur N 3600); Isocyanurate group-containing polyisocyanates based on isophorone diisocyanate (Desmodur Z 4470 BA); Isocyanurate group-containing polyisocyanates based on HDI (Tolonate HDT); Isocyanurate group-containing polyisocyanates based on IPDI (Tolonate IDT); and biuret group-containing polyisocyanates based on HDI (Tolonate HDB).

It is contemplated that the secondary aminoalkoxysilane may be an aliphatic aminosilane which are preferred as a result of their superior light fastness and weatherability. A selected example of an aliphatic aminosilane secondary aminoalkoxysilane compound is bis(trimethoxysilylpropyl)amine such as Silquest A-1170 silane (CAS No.: 82985-35-1).

The coating composition when cured is expected to be long lasting and durable under severe conditions. The decorated chemical strengthened glass is anticipated to be used in a variety of applications and the coating composition must be compatible with the varied conditions and environments of different applications. Decorated chemically strengthened glass may for example be used as part of home appliances. Decorated chemically strengthened glass may also be used to prepare laminated glass. Such decorated laminated glass provides benefits such as safety, security, sound reduction and solar energy control. Laminated glass applications include skylight glazing, automobile glazing, hurricane-resistant curtain walls and windows.

For performance testing, coating compositions according to an embodiment of the inventive coating composition along with comparative coating composition 1 and comparative coating composition 2 were created. The inventive coating composition was prepared by speed-mixing until a homogenous formation resulted with the coating composition components as follows:

### Example 1

| Component | Grams | Wt. Percent |
|---|---|---|
| Alumina filler | 13.5 | 30.0 |
| Copper Chromate black pigment | 9.5 | 21.1 |
| alkoxysilane functionalized isocyanurate binder | 20.00 | 44.4 |
| Dipropylene Glycol Methyl Ether Acetate | 2.02 | 4.5 |
| Total | 45.02 | 100 |

with the alumina filler being 3.4 micrometer sized particles, the pigment being Black 1G from Shepherd Color Company, the alkoxysilane functionalized isocyanurate binder prepared as outlined below, and the Dipropylene Glycol Methyl Ether Acetate being DOWANOL DPMA from The Dow Chemical Company.

The alkoxysilane functionalized isocyanurate binder was prepared according to the following steps. DOWANOL DPMA (30g) from Dow Chemical and Tolonate HDT, HDI isocyanurate (61.62 g, 0.32 equivalent NCO) from Perstorp were added in a 250 ml three neck round bottom flask equipped with a dropping funnel with pressure compensation, a dry argon purge inlet, a digital thermometer and a magnetic stir bar. The solution was mixed on a stir plate under dry argon flow to form a uniform solution. Then Bis[3-(trimethoxysilyl)propyl]amine technical grade, ≥90% (108 g, 0.32 equivalent NH) from Sigma Aldrich was introduced via the dropping funnel into the HDI isocyanurate / DPMA solution under argon purge. The addition was performed at a rate such that 65°C was not exceeded. After the addition of all the Bis[3-(trimethoxysilyl)propyl]amine, the resulting mixture was mixed for at least two hours. A water clear viscous resin solution was obtained which can be stored for months at room temperature without skinning or gelling. The solution of the alkoxysilane functionalized isocyanurate has a solid content of approximately 85% by weight.

The comparative coating composition 1 was prepared as described above for the inventive coating composition except that Tris[3-(trimethoxysilyl)-propyl]isocyanurate was used instead of the alkoxysilane functionalized isocyanurate binder and the Dipropylene Glycol Methyl Ether Acetate was omitted to avoid too low viscosity.

The comparative coating composition 2, an organic thermoset polysester black ink available from Ferro Corp (94-071S UV Blocking Black RTP), was prepared. The ink chemistry is detailed in US 2006/0191625 A1 and US 2010/0071837 A1.

Performance testing specimens were prepared using the embodiment of the inventive coating composition (Example 1), the comparative coating composition 1, and the comparative coating composition 2. The coating compositions were screen printed on Corning Ion-exchanged Gorilla glass 8" x 8" x 1mm using a 32 T screen and medium hardness squeegee to form a 4" x 4" square pattern. Curing was performed by plunging the screen printed part in an oven set at 210°C for 30 minutes for glass sheet decorated with the inventive coating composition, Example 1. Glass sheet decorated with the comparative coating composition 1 was also cured at 210°C for 30 minutes. Glass sheet decorated with the comparative coating composition 2 was cured at 400°C for 20 minutes. The screen printing of the inventive coating composition, Example 1, and comparative coating composition 1 onto the glass substrate produced a dry thickness of about 25 micrometers after curing. The screen printing of the comparative coating composition 2 onto the glass substrate produced a dry thickness of about 15 micrometers after curing.

According to an embodiment of the coating composition, the coating composition, when cured, provides light transmittance lower than 0.2% for all wavelengths in the UV-visible wavelength range for a 25 micrometer thick coating. The coating composition, when cured, preferably also provides overall light transmittance lower than 0.1% in the UV-visible wavelength range for a 25 micrometer thick coating. High opacity is a desirable trait in a decorated glass.

It is contemplated that the coating composition, when cured, may have a gouge hardness at or above 5H (5H-9H) including 6H specifically. Gouge hardness is measured according to ASTM D-3363 (Test Method for Film Hardness by Pencil Test). Gouge hardness is correlated to the standard graded pencil leads with 9H being very hard and 9B being very soft. The range of graded pencil leads from hardest to softest are 9H, 8H, 7H, 6H, 5H, 4H, 3H, 2H, H, F, HB, B, 2B, 3B, 4B, 5B, 6B, 7B, 8B and 9B. High gouge hardness allows handling or assembly of the decorated glass sheets without a significant risk of scoring the decorated parts.

It is contemplated that the coating composition, when cured, may have a cross hatch adhesion score of 4B or 5B. Cross-hatch adhesion is measured according to ASTM D-3359 (Test Method for Cross-hatch Adhesion). For this test coated samples were scribed using a cutting tool (Paint Adhesion Test Kit produced by Gardco) equipped with a fine blade having eleven teeth with 1.0 mm spacing. An adhesive tape (Paul N. Gardner Company, Inc) was applied under pressure on the scribed area and stripped away. The coating was visually inspected to see whether any of the coating was removed from the substrate. Rating was evaluated according to ASTM D-3359 classifications as follows:

| ASTM D-3359 Rating | Coating Removed (%) |
|---|---|
| 5B | 0 |
| 4B | <5 |
| 3B | 5-15 |
| 2B | 15-35 |
| 1B | 35-65 |
| 0B | >65 |

Adhesion of the coating composition to the glass surface helps prevent aesthetic defects from the coating composition chipping or flaking during the coated articles lifetime. Significant adhesion also prevents chipping or flaking of the coating while handling or assembling the coated glass into a finished article comprising the decorated coated glass. The desirable adhesion is achieved without the need for a primer application prior to the decorative coating deposition.

It is contemplated that the coating composition, when cured, may have a cross-hatch adhesion score of 4B or 5B after immersing a coated chemically strengthened sheet in 90°C water for at least 3 hours and drying the coated chemically strengthened glass sheet for at least 2 hours at room temperature. This checks the hot water adhesion properties of the coating composition. Prior to performing the cross-hatch adhesion testing on the dried coated chemically strengthened glass sheet it was visually inspected to verify the humidity resistance of the coating composition.

It is contemplated that the coating composition, when cured, is chemical resistant. Individual chemicals were placed on the cured coating for 15 minutes and covered with a cover glass to prevent evaporation. After 15 minutes the chemicals were washed off with water and the coating inspected. The coating composition should show no effect after 37 wt.% HCl, 1M sodium hydroxide in water, ethanol, mineral oil, toluene, or acetone is placed on the cured coating for 15 minutes.

Performance testing results of an embodiment of the inventive coating composition (Example 1) and the comparative coating compositions are as follows:

| Performance Test | Inventive Coating Composition (Example 1) | Comparative Coating Composition 1 | Comparative Coating Composition 2 |
|---|---|---|---|
| Cosmetic aspect | Uniform opaque black coating | Non-uniform grayish coating showing many bubbled at the glass coating interface | Uniform opaque black coating Medium gloss |
| Overall Light transmittance (300-800 nm range) | <0.1% | >0.1% | <0.1% |
| Cross-hatch adhesion | 4B | Not measurable | 4-5B |
| Gouge Hardness (before hot water) | 6H (hard) | <8B (very soft) | HB |
| Gouge Hardness (after hot water) | 6H | NT | <6B (very soft) |
| Humidity resistance | No appearance change | NT | Turns matte and exhibits cohesive failure |
| Hot water adhesion | 4B | NT | 4-5B |
| Solvent resistance (before hot water) - (50 acetone double rubs) | pass | failed | pass |
| Solvent resistance (after hot water) - (50 acetone double rubs) | pass | failed | failed |

| Chemical resistance | | | |
|---|---|---|---|
| 37 wt% HCl | Pass, no effect | NT | NT |
| 1M sodium hydroxide | Pass, no effect | NT | NT |
| Ethanol | Pass, no effect | NT | NT |
| Mineral oil | Pass, no effect | NT | NT |
| Toluene | Pass, no effect | NT | NT |
| Acetone | Pass, no effect | NT | NT |
| NT: Not tested due to poor cosmetic aspect, unacceptable light transmittance and low hardness | | | |

The shelf stability of the coating composition also was checked to verify that when 10 grams of the liquid coating composition was placed in a glass bottler in an oven set to 55°C for days the coating liquid coating composition did not display signs of gelation, skin formation or significant change in viscosity.

For the purposes of describing and defining the present invention, it is noted that recitations herein of "at least one" component, element, etc., should not be used to create an inference that the alternative use of the articles "a" or "an" should be limited to a single component, element, etc.

It is noted that terms like "preferably," "commonly," and "typically," when utilized herein, are not utilized to limit the scope of the claimed invention or to imply that certain features are critical, essential, or even important to the structure or function of the claimed invention. Rather, these terms are merely intended to identify particular aspects of an embodiment of the present disclosure or to emphasize alternative or additional features that may or may not be utilized in a particular embodiment of the present disclosure.

For the purposes of describing and defining the present invention it is noted that the term "approximately" is utilized herein to represent the inherent degree of uncertainty that may be attributed to any quantitative comparison, value, measurement, or other representation. The term "approximately" is also utilized herein to represent the degree by which a quantitative representation may vary from a stated reference without resulting in a change in the basic function of the subject matter at issue.

Having described the subject matter of the present disclosure in detail and by reference to specific embodiments thereof, it is noted that the various details disclosed herein should not be taken to imply that these details relate to elements that are essential components of the various embodiments described herein. Rather, the claims appended hereto should be taken as the sole representation of the breadth of the present disclosure and the corresponding scope of the various embodiments described herein. Further, it will be apparent that modifications and variations are possible without departing from the scope of the invention defined in the appended claims. More specifically, although some aspects of the present disclosure are identified herein as preferred or particularly advantageous, it is contemplated that the present disclosure is not necessarily limited to these aspects.

## Claims

1. A method of decorating chemically strengthened glass, wherein the method comprises:
providing a glass sheet;
chemically strengthening the glass sheet;
depositing a single phase coating composition on the glass sheet at a temperature below 400°C, wherein the coating composition comprises at least one pigment, at least one mineral filler, and a binder comprising alkoxysilane functionalized isocyanurate or alkoxysilane functionalized biuret, wherein the alkoxysilane is linked to the isocyanurate or biuret by an urea linking group; and
curing the coating composition at a temperature below 400°C.

2. The method of claim 1 wherein, the glass sheet comprises soda lime glass, an alkali containing aluminosilicate glass, an alkali containing aluminoborosilicate glass, an alkali containing borosilicate glass, or an alkali containing glass-ceramic.

3. The method of claim 2 wherein, the glass sheet is chemically strengthened by an ion-exchange process.

4. The method of any one of claims 1 to 3 wherein, the binder is alkoxysilane functionalized isocyanurate.

5. The method of claim 4 wherein, the alkoxysilane functionalized isocyanurate has the chemical structure 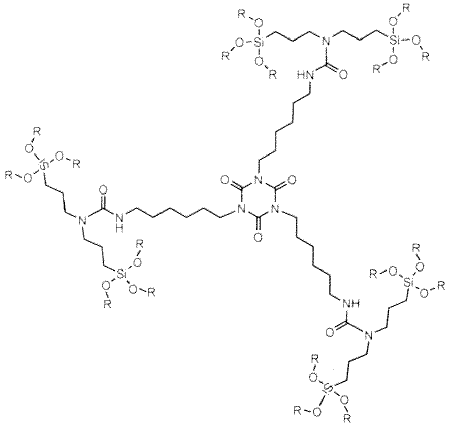 wherein R is a methyl group or an ethyl group.

6. The method of any one of claims 1 to 3 wherein, the binder is alkoxysilane functionalized biuret.

7. The method of claim 6 wherein, the alkoxysilane functionalized biuret has the chemical structure 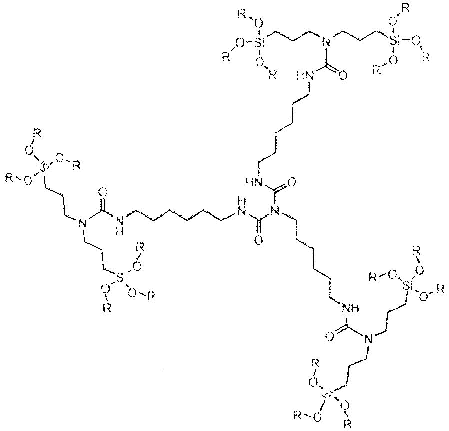 wherein R is a methyl group or an ethyl group.

8. The method of any one of claims 1 to 7 wherein, the coating composition further comprises at least one adhesion promoter selected from 3-glycidoxypropyltrimethoxysilane, tris[3-(trimethoxysilyl)propyl]-isocyanurate, aminopropyl triethoxy silane, or combinations thereof.

9. The method of any one of claims 1 to 8 wherein, the coating composition further comprises a solvent selected from an alcohol, glycol, glycol ether, or glycol ether ester.

10. The method of any one of claims 1 to 9 wherein, the coating composition is deposited by screen printing.

11. The method of any one of claims 1 to 10 wherein, the deposition and curing of the coating composition is at a temperature below 300°C.

12. The method of any one of claims 1 to 11 wherein, the deposition and curing of the coating composition is at a temperature below 200°C.

13. The method of any one of claims 1 to 12 wherein, the alkoxysilane functionalized isocyanurate or alkoxysilane functionalized biuret is formed by stirring a mixture of an isocyanurate or a biuret polyisocyanate and a secondary aminoalkoxysilane.

14. The method of claim 13 wherein, the secondary aminoalkoxysilane is an aliphatic aminosilane.

15. A method of any one of claims 1 to 11, 13 and 14, wherein the method comprises:
providing a glass sheet comprising soda lime glass, an alkali containing aluminosilicate glass, an alkali containing aluminoborosilicate glass, an alkali containing borosilicate glass, or an alkali containing glass-ceramic
chemically strengthening the glass sheet by an ion-exchange process;
depositing a single phase coating composition at a temperature below 300°C, wherein the coating composition comprises at least one pigment, at least one mineral filler, and a binder comprising alkoxysilane functionalized isocyanurate or alkoxysilane functionalized biuret, wherein the alkoxysilane is linked to the isocyanurate or biuret by an urea linking group, the mineral filler is a silicate, alumina, zirconia, carbide, talc, clay, or combinations thereof, and the pigment is carbon black, iron pigment, cobalt pigment, cadmium pigment, chromium pigment, titanium pigment, zinc pigment, lead pigment, magnesium pigment, vanadium pigment, copper chromite black spinel, or combinations thereof; and
curing the coating composition at a temperature below 300°C.

## Patentansprüche

1. Verfahren zum Dekorieren von chemisch gehärtetem Glas, wobei das Verfahren umfasst:
Bereitstellen eines Glasbogens,
chemisches Härten des Glasbogens,
Ablagern einer Einzelphasenbeschichtungszusammensetzung auf dem Glasbogen bei einer Temperatur von unter 400 °C, wobei die Beschichtungszusammensetzung wenigstens ein Pigment, wenigstens einen mineralischen Füllstoff und ein Bindemittel umfasst, welches Alkoxysilan-funktionalisiertes Isocyanurat oder Alkoxysilan-funktionalisiertes Biuret umfasst, wobei das Alkoxysilan mit dem Isocyanurat oder Biuret über eine Ureakopplungsgruppe gekoppelt ist, und
Aushärten der Beschichtungszusammensetzung bei einer Temperatur von unter 400 °C.

2. Verfahren nach Anspruch 1, wobei der Glasbogen Kalknatronglas, ein alkalihaltiges Aluminiumsilikatglas, ein alkalihaltiges Aluminiumborsilikatglas, ein alkalihaltiges Borsilikatglas oder eine alkalihaltige Glaskeramik umfasst.

3. Verfahren nach Anspruch 2, wobei der Glasbogen mittels eines lonenaustauschverfahrens chemisch gehärtet wird.

4. Verfahren nach einem der Ansprüche 1 bis 3, wobei das Bindemittel Alkoxysilan-funktionalisiertes Isocyanurat ist.

5. Verfahren nach Anspruch 4, wobei das Alkoxysilan-funktionalisierte Isocyanurat die chemische Struktur aufweist: 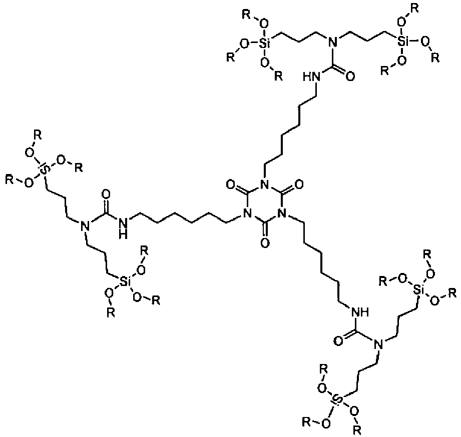 wobei R eine Methylgruppe oder eine Ethylgruppe ist.

6. Verfahren nach einem der Ansprüche 1 bis 3, wobei das Bindemittel Alkoxysilan-funktionalisiertes Biuret ist.

7. Verfahren nach Anspruch 6, wobei das Alkoxysilan-funktionalisierte Biuret die chemische Struktur aufweist: 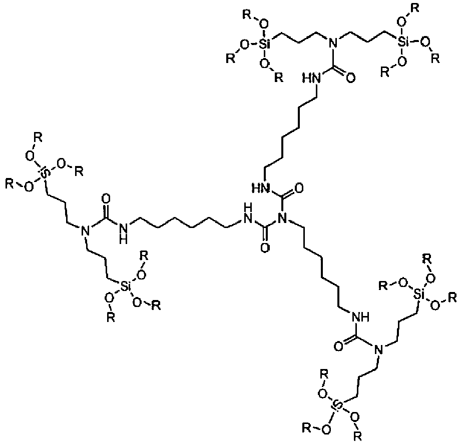 wobei R eine Methylgruppe oder eine Ethylgruppe ist.

8. Verfahren nach einem der Ansprüche 1 bis 7, wobei die Beschichtungszusammensetzung ferner wenigstens einen Adhäsionspromotor umfasst, der aus 3-Glycidoxypropyltrimethoxysilan, Tris-[3-(trimethoxysilyl)-propyl]-isocyanurat, Aminopropyltriethoxysilan oder Kombinationen davon ausgewählt ist.

9. Verfahren nach einem der Ansprüche 1 bis 8, wobei die Beschichtungszusammensetzung ferner ein Lösungsmittel umfasst, das aus Alkohol, Glykol, Glykolether oder Glykoletherester ausgewählt ist.

10. Verfahren nach einem der Ansprüche 1 bis 9, wobei die Beschichtungszusammensetzung mittels Siebdruck abgelagert wird.

11. Verfahren nach einem der Ansprüche 1 bis 10, wobei die Ablagerung und das Aushärten der Beschichtungszusammensetzung bei einer Temperatur von unter 300 °C durchgeführt wird.

12. Verfahren nach einem der Ansprüche 1 bis 11, wobei die Ablagerung und das Aushärten der Beschichtungszusammensetzung bei einer Temperatur von unter 200 °C durchgeführt wird.

13. Verfahren nach einem der Ansprüche 1 bis 12, wobei das Alkoxysilan-funktionalisierte Isocyanurat oder Alkoxysilan-funktionalisierte Biuret durch Rühren einer Mischung eines Isocyanurats oder Biuretpolyisocyanats und eines sekundären Aminoalkoxysilans gebildet wird.

14. Verfahren nach Anspruch 13, wobei das sekundäre Aminoalkoxysilan ein aliphatisches Aminosilan ist.

15. Verfahren nach einem der Ansprüche 1 bis 11, 13 und 14, wobei das Verfahren umfasst:
Bereitstellen eines Glasbogens, der Kalknatronglas, ein alkalihaltiges Aluminiumsilikatglas, ein alkalihaltiges Aluminiumborsilikatglas, ein alkalihaltiges Borsilikatglas oder eine alkalihaltige Glaskeramik umfasst,
chemisches Härten des Glasbogens mittels eines Ionenaustauschverfahrens,
Ablagern einer Einzelphasenbeschichtungszusammensetzung bei einer Temperatur von unter 300 °C, wobei die Beschichtungszusammensetzung wenigstens ein Pigment, wenigstens einen mineralischen Füllstoff und ein Bindemittel umfasst, welches Alkoxysilan-funktionalisiertes Isocyanurat oder Alkoxysilan-funktionalisiertes Biuret umfasst, wobei das Alkoxysilan mit dem Isocyanurat oder Biuret über eine Ureakopplungsgruppe gekoppelt ist, der mineralische Füllstoff ein Silikat, Aluminiumoxid, Zirkonoxid, Karbid, Talkum, Ton oder Kombinationen davon ist, und das Pigment Carbonblack, Eisenpigment, Cobaltpigment, Cadmiumpigment, Chrompigment, Titanpigment, Zinkpigment, Bleipigment, Magnesiumpigment, Vanadiumpigment, Schwarzkupferchromitspinell oder Kombinationen davon ist, und
Aushärten der Beschichtungszusammensetzung bei einer Temperatur von unter 300 °C.

## Revendications

1. Procédé de décoration de verre chimiquement renforcé, dans lequel le procédé comprend :
la fourniture d'une feuille de verre ;
le renforcement chimique de la feuille de verre ;
le dépôt d'une composition de revêtement monophase sur la feuille de verre à une température inférieure à 400°C, dans lequel la composition de revêtement comprend au moins un pigment, au moins une charge minérale, et un liant comprenant un isocyanurate alcoxysilane-fonctionnalisé ou un biuret alcoxysilane-fonctionnalisé, dans lequel l'alcoxysilane est lié à l'isocyanurate ou au biuret par un groupe de liaison urée ; et
le durcissement de la composition de revêtement à une température inférieure à 400°C.

2. Procédé selon la revendication 1, dans lequel la feuille de verre comprend du verre à base de soude et de chaux, un verre d'aluminosilicate contenant un alcali, un verre d'aluminoborosilicate contenant un alcali, un verre de borosilicate contenant un alcali, ou une vitrocéramique contenant un alcali.

3. Procédé selon la revendication 2, dans lequel la feuille de verre est chimiquement renforcée par un procédé d'échange d'ions.

4. Procédé selon l'une quelconque des revendications 1 à 3, dans lequel le liant est un isocyanurate alcoxysilane-fonctionnalisé.

5. Procédé selon la revendication 4, dans lequel, l'isocyanurate alcoxysilane-fonctionnalisé présente la structure chimique 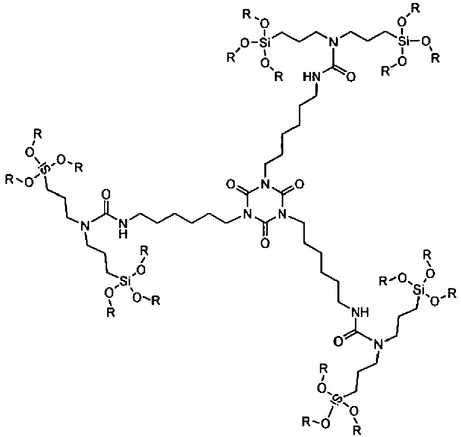 où R est un groupe méthyle ou un groupe éthyle.

6. Procédé selon l'une quelconque des revendications 1 à 3, dans lequel le liant est un biuret alcoxysilane-fonctionnalisé.

7. Procédé selon la revendication 6, dans lequel le biuret alcoxysilane-fonctionnalisé présente la structure chimique 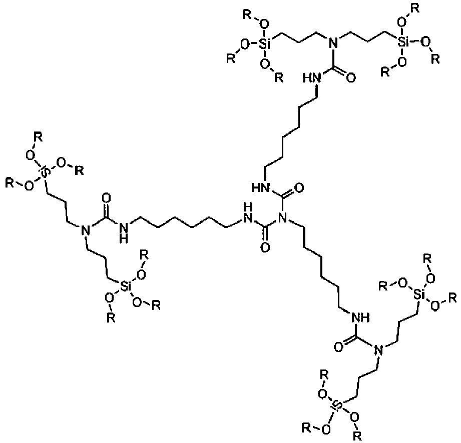 où R est un groupe méthyle ou un groupe éthyle.

8. Procédé selon l'une quelconque des revendications 1 à 7, dans lequel la composition de revêtement comprend de plus au moins un promoteur d'adhérence choisi parmi le 3-glycidoxypropyltriméthoxysilane, le tris[3-(triméthoxysilyl)propyl]-isocyanurate, l'aminopropyltriéthoxysilane, ou des combinaisons de ceux-ci.

9. Procédé selon l'une quelconque des revendications 1 à 8, dans lequel la composition de revêtement comprend de plus un solvant choisi parmi un alcool, glycol, glycol éther ou ester de glycol éther.

10. Procédé selon l'une quelconque des revendications 1 à 9, dans lequel, la composition de revêtement est déposée par sérigraphie.

11. Procédé selon l'une quelconque des revendications 1 à 10, dans lequel le dépôt et durcissement de la composition de revêtement se fait à une température inférieure à 300°C.

12. Procédé selon l'une quelconque des revendications 1 à 11, dans lequel le dépôt et durcissement de la composition de revêtement se fait à une température inférieure à 200°C.

13. Procédé selon l'une quelconque des revendications 1 à 12, dans lequel l'isocyanurate alcoxysilane-fonctionnalisé ou le biuret alcoxysilane-fonctionnalisé est formé par agitation d'un mélange d'un isocyanurate ou d'un biuret polyisocyanate et d'un aminoalcoxysilane secondaire.

14. Procédé selon la revendication 13, dans lequel l'aminoalcoxysilane secondaire est un aminosilane aliphatique.

15. Procédé selon l'une quelconque des revendications 1 à 11, 13 et 14, dans lequel le procédé comprend :
la fourniture d'une feuille de verre comprenant du verre à base de soude et de chaux, un verre d'aluminosilicate contenant un alcali, un verre d'aluminoborosilicate contenant un alcali, un verre de borosilicate contenant un alcali, ou une vitrocéramique contenant un alcali ;
le renforcement chimique de la feuille de verre par un procédé d'échange d'ions ;
le dépôt d'une composition de revêtement monophase à une température inférieure à 300°C, dans lequel la composition de revêtement comprend au moins un pigment, au moins une charge minérale, et un liant comprenant un isocyanurate alcoxysilane-fonctionnalisé ou un biuret alcoxysilane-fonctionnalisé, dans lequel l'alcoxysilane est lié à l'isocyanate ou au biuret par un groupe de liaison urée, la charge minérale est un silicate, alumine, oxyde de zirconium, carbure, stéatite, argile, ou des combinaisons de ceux-ci, et le pigment est du noir de carbone, pigment de fer, pigment de cobalt, pigment de cadmium, pigment de chrome, pigment de titane, pigment de zinc, pigment de plomb, pigment de magnésium, pigment de vanadium, spinelle noire de chromite de cuivre, ou des combinaisons de ceux-ci ; et
le durcissement de la composition de revêtement à une température inférieure à 300°C.
